# FASCICULE DE BREVET EUROPEEN

(11) **EP 1 410 401 B1**
(45) Date de publication et mention de la délivrance du brevet: **21.05.2008**
(21) Numéro de dépôt: 02767567.7
(22) Date de dépôt: 11.07.2002
(51) Int. Cl.: G21C 1/00

(54) **PROCEDE ET DISPOSITIF D'ALIMENTATION D'AU MOINS UN GENERATEUR DE VAPEUR D'UN REACTEUR NUCLAIRE A EAU SOUS PRESSION PENDANT LES PERIODES D'ARRET DU REACTEUR**
VERFAHREN UND ANLAGE ZUR WASSEREINSPEISUNG WENIGSTENS EINES DAMPFERZEUGERS EINES DRUCKWASSERREAKTORS BEI ABGESCHALTETEM REAKTOR
METHOD AND DEVICE FOR SUPPLYING PRESSURISED WATER TO A STEAM GENERATOR OF A NUCLEAR REACTOR DURING SHUT-DOWN PERIODS OF THE REACTOR

(30) Priorité: 24.07.2001 FR 0109872
(43) Date de publication de la demande: 21.04.2004
(73) Titulaire: Areva NP, 92400 Courbevoie (FR)
(72) Inventeur: DAGARD, Philippe, F-78160 Marly le Roi (FR)
(74) Mandataire: Bouget, Lucien
(86) Numéro de dépôt international: PCT/FR2002/002462
(87) Numéro de publication internationale: WO 2003/010776

(56) Documents cités:
- EP-A- 0 798 469
- DE-A- 3 005 643
- DE-A- 3 115 344
- FR-A- 2 433 365
- US-A- 1 353 457
- US-A- 4 687 626
- US-A- 5 257 296
- DATABASE WPI Section Ch, Week 199611 Derwent Publications Ltd., London, GB; Class K06, AN 1996-104714 XP002191591 & RU 2 037 893 C (SOPLENKOV K I), 19 juin 1995 (1995-06-19)

## Description

L'invention concerne un procédé d'alimentation d'un générateur de vapeur d'un réacteur nucléaire à eau sous pression, en eau d'alimentation secondaire, au cours d'une phase pendant laquelle on fait varier la température et la pression dans le réacteur nucléaire, entre des conditions d'arrêt à chaud du réacteur nucléaire et des conditions permettant le démarrage d'un circuit de refroidissement du réacteur à l'arrêt, appelé circuit RRA.

Les réacteurs nucléaires à eau sous pression comportent un circuit primaire dans lequel circule de l'eau de refroidissement du coeur du réacteur nucléaire et sur lequel est disposé au moins un générateur de vapeur assurant un échange de chaleur entre l'eau de refroidissement du réacteur nucléaire, ou eau primaire, et de l'eau d'alimentation ou eau secondaire qui est échauffée et vaporisée à l'intérieur du générateur de vapeur par échange de chaleur avec l'eau de refroidissement primaire.

Au moment de la mise en service du réacteur nucléaire, de l'eau d'alimentation est prélevée dans un réservoir de stockage et introduite dans la partie secondaire du générateur de vapeur.

Pendant le fonctionnement du réacteur nucléaire, l'eau d'alimentation introduite dans la partie secondaire du générateur de vapeur est échauffée et vaporisée ; la vapeur d'eau est récupérée et séchée dans la partie supérieure des générateurs de vapeur, puis envoyée à la turbine associée au réacteur nucléaire.

La vapeur utilisée pour actionner la turbine est ensuite récupérée dans un condenseur et l'eau formée dans le condenseur est réchauffée et renvoyée dans un réservoir de stockage d'eau d'alimentation, dans lequel elle est prélevée pour alimenter le générateur de vapeur.

L'eau d'alimentation du générateur de vapeur est prélevée dans le réservoir de stockage par des pompes et réchauffée et mise en pression avant d'être réinjectée dans la partie secondaire du générateur de vapeur.

Après un certain temps de fonctionnement du réacteur nucléaire, il est nécessaire d'effectuer une opération de rechargement du coeur du réacteur nucléaire, au cours de laquelle on effectue des permutations d'assemblages de combustible à l'intérieur du coeur et le remplacement de certains assemblages usagés dont le taux de combustion a atteint la limite fixée par les conditions de fonctionnement du réacteur nucléaire.

Pour effectuer un rechargement du coeur du réacteur nucléaire, il est nécessaire d'effectuer un arrêt complet du réacteur et une dépressurisation et un refroidissement du circuit primaire, jusqu'à une température permettant d'ouvrir le couvercle de la cuve pour accéder au coeur du réacteur nucléaire à l'intérieur de la cuve, depuis une piscine dans laquelle débouche la cuve du réacteur nucléaire.

Pour effectuer un arrêt et un refroidissement du réacteur nucléaire jusqu'à une température permettant d'accéder à l'intérieur de la cuve, cet arrêt du réacteur nucléaire étant désigné comme arrêt à froid, on effectue, dans un premier temps, un arrêt du réacteur nucléaire par retombée de l'ensemble des barres de commande dans le coeur du réacteur pour obtenir des conditions caractérisant un arrêt à chaud du réacteur nucléaire.

L'arrêt à chaud du réacteur nucléaire permet de faire passer la température dans le circuit primaire des températures caractéristiques du réacteur en fonctionnement (300°C à 320°C) à une température homogène caractérisant l'arrêt à chaud (de l'ordre de 296°C) ; la pression dans le circuit primaire est maintenue à une valeur constante (de l'ordre de 155 bars) ; la puissance dégagée par le coeur ou puissance résiduelle du réacteur est alors inférieure à 2 % de la puissance nominale. La température dans la partie secondaire du générateur de vapeur passe d'une valeur de l'ordre de 290°C à une température d'équilibre avec le circuit primaire (296°C), la pression restant sensiblement constante et égale à 83 bars.

Pour réaliser un arrêt à froid du réacteur nucléaire, on utilise un circuit de refroidissement appelé circuit de refroidissement du réacteur à l'arrêt ou circuit RRA.

Le circuit RRA ne peut être mis en service que lorsque la pression et la température dans le circuit primaire ont atteint des niveaux sensiblement inférieurs aux niveaux de température et de pression d'un arrêt à chaud. Généralement, le circuit RRA ne peut être mis en service qu'après que le circuit primaire a été refroidi jusqu'à 180°C au moins, la pression dans le circuit primaire ayant été abaissée jusqu'à 30 bars au moins. Dans les conditions de démarrage du circuit RRA, le circuit secondaire est en équilibre de température avec le circuit primaire (180°C) et la pression n'est plus que de 10 bars environ.

Pour passer des conditions de température et de pression de l'arrêt à chaud aux conditions permettant de démarrer le circuit RRA, on utilise, de manière classique, un circuit d'alimentation de secours du générateur de vapeur, appelé circuit ASG. De l'eau d'alimentation est prélevée dans un réservoir de stockage du circuit ASG et injectée dans le générateur de vapeur par l'intermédiaire d'une canalisation d'alimentation normale reliée à une tubulure du générateur de vapeur. L'eau du circuit ASG est à basse température (entre 7°C et 50°C environ) et l'injection d'eau par un piquage, dans la canalisation d'alimentation du générateur de vapeur, engendre des chocs thermiques qui peuvent entraîner, du fait de leur répétition, une fatigue thermique de la ligne d'injection et des tubulures du générateur de vapeur.

En effet, l'eau du circuit ASG est introduite dans la ligne d'injection du générateur de vapeur par jets successifs commandés de manière manuelle. On caractérise généralement l'utilisation du circuit ASG par un facteur d'usage qui est égal au rapport du nombre de jets unitaires d'eau froide injectés dans le générateur à un nombre d'injections maximal acceptable. Le facteur d'usage doit être le plus faible possible, ce qui restreint l'utilisation du circuit ASG.

Le circuit ASG est utilisé également lors d'un redémarrage du réacteur nucléaire, à partir des conditions de mise en service du circuit RRA jusqu'aux conditions caractérisant l'arrêt à chaud, pour effectuer des injections d'eau secondaire nécessaires pour maintenir le niveau dans le générateur de vapeur sensiblement constant.

En plus de la fatigue thermique de la ligne d'injection de la tubulure du générateur de vapeur produite par l'injection d'eau froide, l'utilisation du circuit ASG présente l'inconvénient de mettre en service un circuit de secours du réacteur nucléaire, dans le cadre du fonctionnement normal du réacteur nucléaire.

L'invention porte sur un procédé d'alimentation d'un générateur de vapeur d'un réacteur nucléaire à eau sous pression, en eau d'alimentation secondaire, le réacteur nucléaire comportant un circuit primaire dans lequel circule de l'eau primaire de refroidissement du coeur du réacteur nucléaire assurant l'échauffement, dans le générateur de vapeur, de l'eau d'alimentation par échange thermique, dans lequel on assure l'alimentation du générateur de vapeur, en utilisant au moins un iniecteur-condenseur dont on alimente au moins une première entrée en vapeur d'eau et une seconde entrée avec de l'eau d'alimentation du générateur de vapeur, de l'eau d'alimentation du générateur de vapeur étant fournie sous pression et à température élevée au générateur de vapeur, à partir d'une sortie de l'injecteur condenseur. Un tel procédé est connu de EP-A-0 768 469.

Le but de l'invention est de diminuer les coûts de construction, d'installation et de maintenance ainsi que l'encombrement des moyens d'alimentation du générateur de vapeur et d'améliorer ta fiabilité de l'alimentation du générateur de vapeur et des moyens utilisés pour cette alimentation.

Dans ce but, l'invention porte sur un procédé conforme à la revendication 1.

L'invention est également relative à un dispositif d'alimentation selon la revendication 7.

Afin de bien faire comprendre l'invention, on va maintenant décrire à titre d'exemple, en se référant aux figures jointes en annexe, la mise en oeuvre du procédé suivant l'invention et les moyens associés au circuit du réacteur nucléaire, pour la mise en oeuvre de ce procédé.

La figure 1A est un schéma montrant les circuits d'alimentation de générateurs de vapeur d'un réacteur nucléaire à eau sous pression, selon l'art antérieur.

La figure 1B est un schéma montrant les circuits d'alimentation de générateurs de vapeur d'un réacteur nucléaire à eau sous pression et des moyens associés pour la mise en oeuvre du procédé suivant l'invention.

La figure 2 est une vue en coupe d'un injecteur condenseur utilisé pour la mise en oeuvre du procédé selon l'invention.

La figure 3 est un schéma montrant la disposition en parallèle de trois injecteurs condenseurs utilisés dans la mise en oeuvre du procédé de l'invention.

La figure 4 est un diagramme température du circuit primaire du réacteur en fonction du temps, au cours de différentes phases de fonctionnement du réacteur nucléaire entre les conditions d'un arrêt à chaud et celles permettant la mise en service d'un circuit pour mise à l'arrêt à froid.

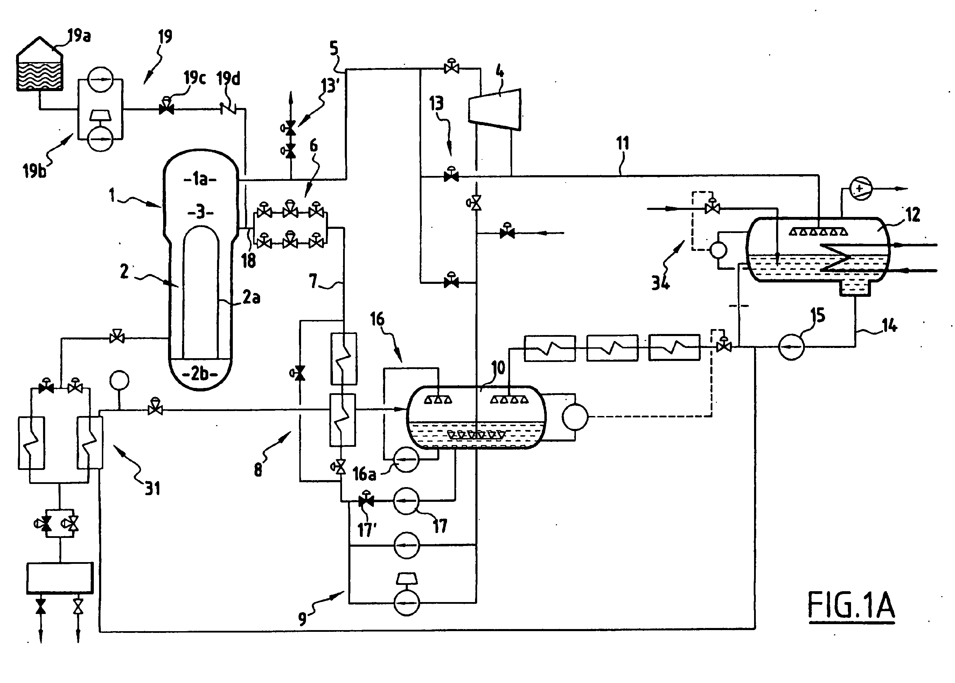

Sur la figure 1A, on a représenté un générateur de vapeur 1 d'un réacteur nucléaire à eau sous pression dont la partie primaire 2 comporte un faisceau de tubes d'échange thermique 2a et une boîte à eau 2b.

La boîte à eau 2b comporte deux compartiments qui sont reliés chacun à une canalisation d'un circuit primaire du réacteur nucléaire permettant de faire circuler de l'eau de refroidissement sous pression au contact du coeur du réacteur nucléaire situé à l'intérieur d'une cuve.

La partie secondaire 3 du générateur de vapeur est disposée à l'intérieur de l'enveloppe externe du générateur de vapeur, au-dessus de la boîte à eau 2b et autour du faisceau de tubes d'échange 2a, de manière que de l'eau d'alimentation secondaire introduite dans l'enveloppe du générateur de vapeur puisse être échauffée et vaporisée au contact des tubes du faisceau de tubes 2a dans lesquels circule l'eau primaire de refroidissement du réacteur nucléaire.

De la vapeur est récupérée dans la partie supérieure 1a de l'enveloppe du générateur de vapeur 1 et envoyée à la turbine 4 du générateur de vapeur par une canalisation de vapeur 5.

L'eau d'alimentation secondaire du générateur de vapeur est introduite dans l'enveloppe du générateur de vapeur 1 par un piquage 18, à un niveau situé sensiblement à la partie supérieure du faisceau 2a, dans un espace annulaire entourant le faisceau 2a.

L'eau d'alimentation secondaire est introduite dans le générateur de vapeur par un circuit 6 d'alimentation normale du générateur de vapeur (appelé ARE).

Le circuit d'alimentation ARE de la partie secondaire 3 du générateur de vapeur comporte des canalisations placées en parallèle l'une par rapport à l'autre sur lesquelles sont montées des vannes motorisées et des vannes de réglage.

Le circuit ARE est relié, par l'intermédiaire d'une conduite 7, d'un circuit de réchauffage haute pression 8 (circuit AHP) et de deux turbo-pompes d'alimentation 9 placées en parallèle, à un réservoir 10 d'eau d'alimentation du générateur de vapeur dans lequel le niveau de l'eau d'alimentation est régulé.

L'ensemble de pompes d'alimentation 9 peut comporter en particulier deux turbo-pompes d'alimentation normale du générateur de vapeur et une pompe d'alimentation auxiliaire du générateur de vapeur appelée pompe APD qui est utilisée dans les phases intermédiaires entre un arrêt à chaud du réacteur nucléaire et le démarrage d'un circuit de refroidissement pour arrêt à froid (RRA).

La vapeur récupérée à la sortie de la turbine 4 ou prélevée directement sur la conduite de vapeur 5 grâce à une vanne de contoumement 13 est envoyée dans le condenseur 12 qui est refroidi de manière à assurer la condensation de la vapeur. L'eau récupérée est renvoyée dans le réservoir de stockage d'eau d'alimentation 10, par l'intermédiaire d'une conduite 14 sur laquelle est placée une pompe d'extraction 15 (pompe CEX) et d'un circuit de réchauffage basse pression (ABP).

De la vapeur prélevée sur la conduite de vapeur 15 ou à l'entrée de la turbine 4 peut être également envoyée à l'intérieur du réservoir de stockage 10 pour le réchauffage et le dégazage de l'eau d'alimentation.

Un circuit 16 de recirculation de l'eau d'alimentation comportant une pompe de circulation 16a permet de faire circuler en circuit fermé de l'eau d'alimentation du réservoir 10.

Les différents moyens de chauffage, d'alimentation et de prélèvement du réservoir de stockage 10 d'eau d'alimentation secondaire sont réglés de manière que l'eau dans le réservoir 10 se trouve à une température inférieure à 130°C et à une pression de l'ordre de 2,5 bars lors d'un arrêt à chaud. Le réservoir 10 est placé à un niveau situé sensiblement au-dessus (dénivelée de 20 m) des moyens d'injection d'eau dans le générateur de vapeur, de sorte que l'eau d'alimentation est fournie à une pression sensiblement supérieure à 2,5 bars (par exemple 6 bars).

Après un arrêt du réacteur nucléaire, par exemple un arrêt programmé, obtenu par retombée des barres de commande en position d'insertion maximale dans le coeur du réacteur nucléaire, le circuit primaire doit être refroidi et dépressurisé.

Pour faire varier les températures et pressions dans le circuit primaire et en particulier dans la partie primaire 2a-2b du générateur de vapeur, des conditions de l'arrêt à chaud à des conditions permettant de mettre en fonctionnement un circuit de refroidissement du réacteur à l'arrêt (RRA) (température de l'ordre de 180°C et pression de l'ordre de 10 bars, dans le générateur de vapeur), on peut utiliser la pompe 17 du système APD pour alimenter la partie secondaire du générateur de vapeur en eau d'alimentation à une température, une pression et un débit voulus.

Pour refroidir le circuit primaire, on apporte aux générateurs de vapeur un débit d'eau secondaire important assurant l'évacuation de la chaleur du circuit primaire. Le réglage du débit d'alimentation est obtenu par réglage de vannes motorisées 17' du circuit APD et des vannes 6 du circuit ARE à petit débit.

Pour faire passer le circuit primaire et le générateur de vapeur des conditions de fonctionnement du circuit RRA aux conditions d'arrêt à chaud, par exemple préalablement à un redémarrage du réacteur nucléaire, on assure une circulation de l'eau de refroidissement dans le circuit primaire à l'aide des pompes du circuit primaire du réacteur nucléaire, cette circulation provoquant un échauffement de l'eau primaire et un dégagement de chaleur et on alimente la partie secondaire du générateur de vapeur avec un faible débit d'eau d'alimentation secondaire, de sorte que la température du circuit primaire puisse s'élever jusqu'aux conditions d'un arrêt à chaud. L'alimentation du générateur de vapeur en eau primaire est assurée par la pompe APD 17, à un faible débit qui peut être modulé par la vanne motorisée 17' pour maintenir le niveau dans le générateur de vapeur.

Les dispositifs utilisés dans le cas de la technique connue comportant le système APD présentent différents inconvénients.

Le système APD comporte au moins une motopompe qui doit pouvoir alimenter les générateurs de vapeur du réacteur nucléaire dans les conditions d'arrêt à chaud ; la partie secondaire des générateurs de vapeur renferme alors de l'eau à une température de l'ordre de 296°C, sous une pression de l'ordre de 83 bars. L'eau injectée dans les tubulures des générateurs de vapeur qui est prélevée dans le réservoir 10 d'eau d'alimentation est à une température au plus égale à 130°C et doit être injectée avec un débit maximal de l'ordre de 260 m³/h, pour un réacteur type quatre boucles, 1300 MWe.

Pour cela, on utilise une motopompe APD dont le moteur électrique d'entraînement est alimenté sous une tension de 6600 volts. Le réglage du débit est effectué au moyen d'une vanne réglante 17' disposée en aval de la motopompe 17. On utilise également des vannes du système ARE pour le réglage des petits débits.

La pompe APD comporte une partie tournante à plusieurs étages qui nécessite des paliers et garnitures d'étanchéité. La fiabilité du fonctionnement de la pompe peut être réduite du fait que ces paliers et garnitures sont susceptibles d'être détériorés en service. Le coût et l'encombrement des pompes du système APD peuvent de plus être importants.

En outre, l'eau secondaire injectée dans les tubulures des générateurs de vapeur est à une température de l'ordre de 110°C, en tenant compte des déperditions calorifiques, sensiblement inférieure à la température dans la partie secondaire du générateur de vapeur. II peut en résulter une fatigue thermique des tubulures des générateurs de vapeur et piquages associés qui sont à une température proche de celle du générateur de vapeur.

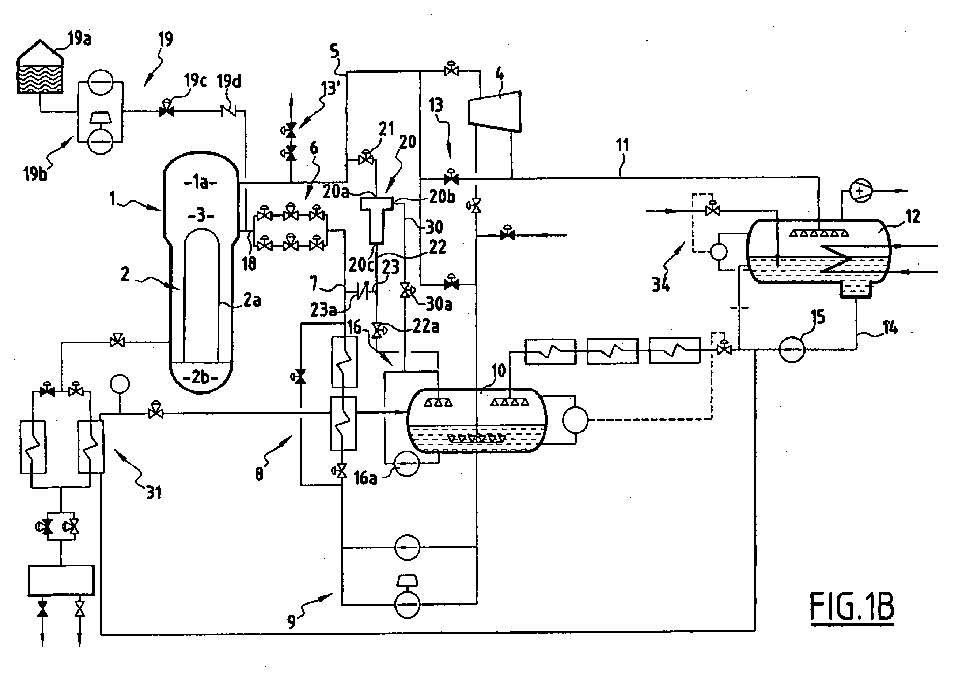

Le procédé suivant l'invention utilise au moins un injecteur-condenseur 20 disposé sur le circuit d'alimentation des générateurs de vapeur, comme représenté sur la figure 1B, pour assurer l'injection d'eau d'alimentation dans les générateurs de vapeur du réacteur nucléaire, pour passer des conditions de température et de pression dans le circuit primaire relatives à un arrêt à chaud, aux conditions permettant la mise en service du circuit RRA.

Un injecteur-condenseur est un appareil à thermocompression passif, qui ne contient pas de pièce mobile en rotation, contrairement à une pompe. Un débit de vapeur introduit dans l'injecteur-condenseur par au moins une première entrée permet d'aspirer de l'eau qui est introduite dans l'injecteur-condenseur par une seconde entrée et qui se mélange à la vapeur. A la sortie de l'injecteur-condenseur, le flux est totalement liquide.

L'injecteur-condenseur présente la forme d'une tuyère de Laval (convergente-divergente). La vapeur s'écoule dans l'injecteur-condenseur à une vitesse qui devient supersonique à partir du col de la tuyère. Une partie de l'enthalpie de la vapeur est convertie en énergie cinétique et permet l'entraînement de l'eau. La vapeur se condense en transmettant son énergie cinétique à l'eau, par l'intermédiaire d'une onde de condensation en aval du col de la tuyère. La pression du mélange eau-vapeur dans le diffuseur peut être supérieure aux pressions d'entrée de l'eau et de la vapeur.

L'injecteur-condenseur a un fonctionnement de type volumétrique et permet de refouler un liquide tel que de l'eau, avec un débit constant quelle que soit la pression de refroidissement, jusqu'à une valeur de pression maximale.

Dans le cas de l'utilisation d'au moins un injecteur-condenseur 20 pour assurer l'alimentation d'au moins un générateur de vapeur 1 d'un réacteur nucléaire à eau sous pression, comme représenté sur la figure 1, l'injecteur-condenseur 20 est alimenté en vapeur par au moins une première entrée, à partir d'un générateur de vapeur, par l'intermédiaire de la canalisation de vapeur 5 reliée à une conduite de prélèvement sur laquelle est placée une vanne d'arrêt 21. De l'eau est aspirée dans le réservoir de stockage 10 et introduite dans l'injecteur-condenseur 20, par une seconde entrée.

La sortie de l'injecteur-condenseur 20 est reliée par une canalisation 23 sur laquelle est placé un clapet anti-retour 23a à la conduite 7 d'alimentation du générateur de vapeur en eau secondaire.

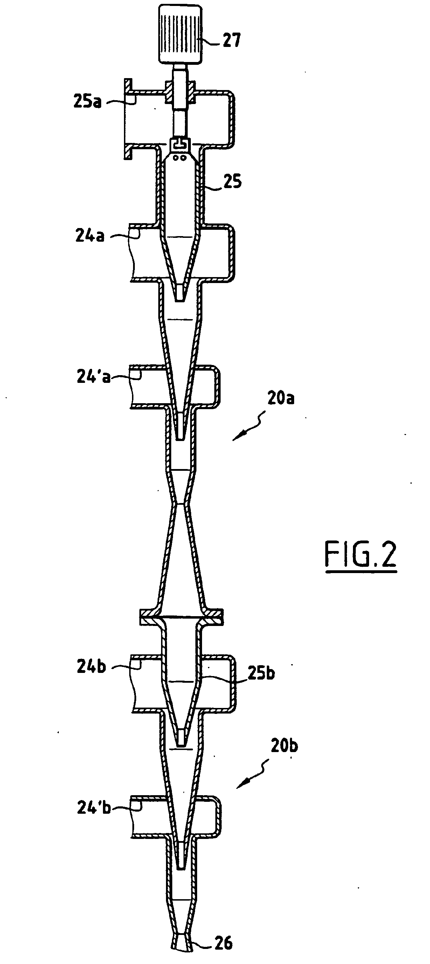

De préférence, pour la mise en oeuvre de l'invention, on utilise au moins un injecteur-condenseur à deux étages tel que représenté sur la figure 2.

Les deux étages 20a et 20b de l'injecteur-condenseur 20 sont pratiquement identiques, de sorte qu'on ne décrira en détail que l'un des étages (par exemple l'étage supérieur 20a).

L'étage 20a de l'injecteur-condenseur réalisé sous la forme d'une tuyère de Laval comporte deux entrées de vapeur (ou premières entrées) 24a et 24'a et une entrée d'eau (ou seconde entrée) 25. Les entrées de vapeur sont placées latéralement dans deux zones successives de l'injecteur-condenseur, dans la direction axiale, c'est-à-dire la direction de circulation des fluides dans l'injecteur-condenseur. L'entrée d'eau 25a communique avec une tuyère d'injection 25 montée mobile dans la direction axiale de l'appareil, dans un sens et dans l'autre, qui peut être déplacée pour régler la position du point d'injection d'eau par rapport au col de l'injecteur-condenseur, par un actionneur 27 commandé à distance. Le conduit d'injection d'eau 25 est alimenté en eau à partir du réservoir de stockage 10, par exemple, au niveau du circuit de recirculation 16, par une entrée d'eau 25a.

Le second étage 20b de l'injecteur-condenseur comporte deux entrées latérales de vapeur 24b et 24'b et une entrée centrale d'eau (seconde entrée) constituées par un conduit communiquant avec la sortie du premier étage 20a.

Le premier étage fournit en sortie de l'eau à une pression et température intermédiaires et le second étage est utilisé pour ajuster ces paramètres aux conditions requises de l'injecteur-condenseur. La pression et le débit de la vapeur introduite dans les différentes entrées de vapeur de 1'injecteur condenseur 20 sont réglés par une vanne de réglage et des orifices calibrés associés à chacune des entrées de vapeur.

Le procédé suivant l'invention peut être mis en oeuvre en utilisant l'injecteur condenseur 20 alimenté par l'intermédiaire de la canalisation de vapeur 5 en vapeur provenant de la partie supérieure 1a d'au moins un générateur de vapeur 1.

Dans le cas de l'arrêt à chaud, cette vapeur est à une température de 286°C et à une pression de 83 bars.

De l'eau d'alimentation secondaire du générateur de vapeur provenant du circuit de recirculation 16 alimente la seconde entrée 25a de l'étage supérieur 20a de l'injecteur condenseur. Elle est entraînée par la vapeur à haute température et à haute pression qui se mélange à l'eau provenant du circuit de recirculation 16 du réservoir 10, de telle sorte qu'à la sortie 26 de l'injecteur condenseur 20, on récupère de l'eau entraînée par la vapeur à une température sensiblement supérieure à la température de l'eau dans le réservoir 10. Cette température peut être par exemple de 160°C à 180°C.

L'injecteur condenseur 20 assure à lui seul l'échauffement, la mise en pression et l'injection de l'eau d'alimentation dans la partie secondaire du générateur de vapeur. L'eau introduite dans la tubulure d'entrée 18 du générateur de vapeur est à une température supérieure à la température d'injection de l'eau par un dispositif suivant l'art antérieur comportant la pompe 17 du système APD (ou a fortiori un système ASG).

On réduit ainsi la fatigue thermique dans la tubulure d'entrée 18 de la partie secondaire du générateur de vapeur ainsi que les sollicitations thermiques exercées sur la virole entourant le faisceau et les composants internes des générateurs de vapeur. L'alimentation du générateur de vapeur est assurée de manière passive par l'injecteur condenseur, c'est-à-dire sans nécessiter une alimentation électrique d'un moteur d'entraînement d'une pompe.

L'eau s'écoulant à travers la tuyère 26 est entraînée par la vapeur dont elle assure la condensation, tout en s'échauffant, de sorte qu'on récupère, à la sortie 20c de l'injecteur condenseur, un courant d'eau entraîné par l'effet dynamique de la vapeur et portée à une pression supérieure à la pression d'entrée de l'eau et de la vapeur dans l'injecteur condenseur. La température de l'eau en sortie est supérieure à la température de l'eau à l'entrée de l'injecteur-condenseur.

L'injecteur condenseur peut comporter de plus, en aval du col 25 du conduit de l'injecteur condenseur, une ouverture de purge qui peut être reliée à une conduite de purge de l'injecteur condenseur, par l'intermédiaire d'une vanne de sectionnement et qui est utilisée pour l'amorçage de l'appareil, au démarrage.

Pour la mise en oeuvre de l'invention, il est possible d'utiliser un injecteur condenseur à plusieurs étages tel que représenté sur la figure 2 dans lequel un courant central d'eau est entraîné par un courant périphérique de vapeur ou encore un injecteur condenseur d'un type différent comportant par exemple une buse d'eau annulaire et un conduit central d'injection de vapeur.

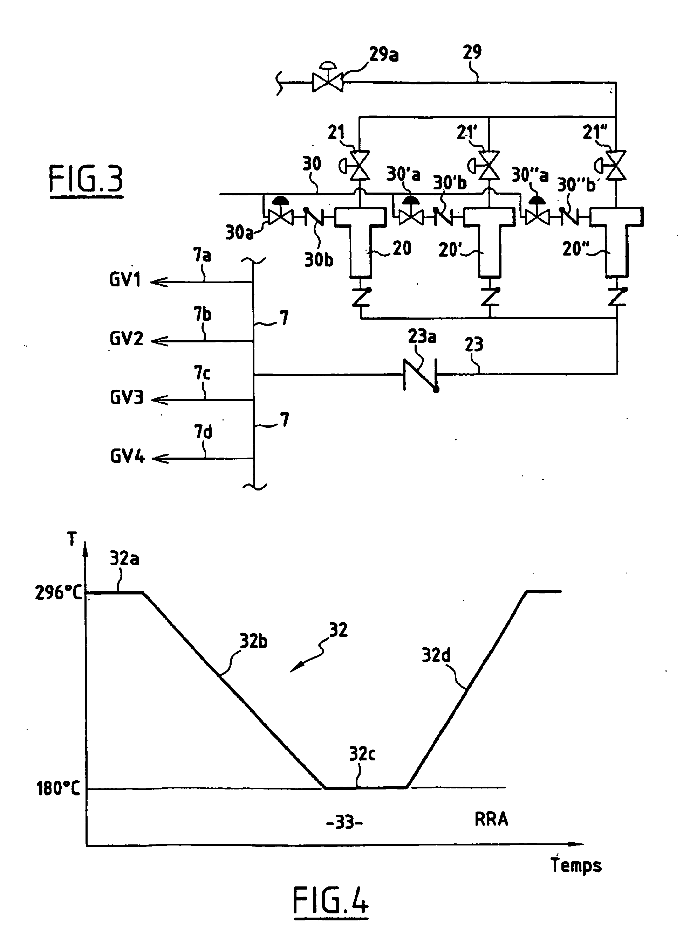

Sur la figure 3, on a représenté trois injecteurs condenseurs 20, 20', 20" qui peuvent être réalisés sous une forme telle que représentée sur la figure 2 et qui sont utilisés pour réaliser le refroidissement du circuit primaire du réacteur nucléaire entre les conditions d'un arrêt à chaud et les conditions de mise en service du RRA et pour réaliser des appoints d'eau secondaire lors d'un réchauffage du circuit primaire du réacteur nucléaire, depuis les conditions de mise hors service du RRA jusqu'aux conditions de température et de pression d'un arrêt à chaud.

Comme il sera expliqué par la suite, pour effectuer le refroidissement ou le réchauffage du réacteur nucléaire entre les conditions d'un arrêt à chaud et les conditions de mise en service du RRA, on peut utiliser plusieurs injecteurs condenseurs et par exemple un injecteur condenseur 20 pouvant produire un débit d'eau d'alimentation de 30 m³/h et deux injecteurs condenseurs 20' et 20" pour produire un débit d'eau de l'ordre de 120 m³/h chacun.

De ce fait, on peut fournir au générateur de vapeur du réacteur nucléaire à eau sous pression un débit pouvant aller d'à peu près 260 m³/h à 25 m³/h, compte tenu de la séquence de fonctionement des injecteurs condenseurs et du réglage des injecteurs.

Les trois injecteurs condenseurs 20, 20' et 20" sont placés en parallèle et reliés par des vannes de sectionnement respectives 21, 21' et 21", à une ligne d'alimentation en vapeur 29 elle-même reliée à la conduite de vapeur 5, en amont de la turbine 4 et du contoumement de la vapeur 13.

Sur la ligne 29 est placée une vanne 29a permettant de commander l'admission de la vapeur dans la ligne d'alimentation 29 commune aux trois injecteurs condenseurs 20, 20' et 20".

Les vannes 21, 21' et 21" permettent de réaliser l'admission de la vapeur au niveau des premières entrées respectives des injecteurs condenseurs 20, 20', 20", lorsqu'ils sont mis en fonctionnement.

Les injecteurs condenseurs sont également alimentés, au niveau de leur seconde entrée, en eau d'alimentation provenant du circuit de recirculation 16 du réservoir 10 par des embranchements de la ligne 30 représentée sur la figure 1 sur chacun desquels sont placés une vanne de sectionnement 30a, 30'a ou 30"a et un clapet anti-retour 30b, 30'b ou 30"b reliés à chacune des secondes entrées des injecteurs condenseurs 20, 20' et 20".

On peut ainsi mettre en service, par commande des vannes d'arrêt telles que 21, 21' et 21" et des vannes d'arrêt 30a des embranchements d'amenée d'eau d'alimentation, un ou plusieurs injecteurs condenseurs dont les sorties sont reliées à la conduite 23 de liaison des sorties des injecteurs condenseurs à la ligne 7 d'alimentation du générateur de vapeur 1, ou plus généralement à des lignes d'alimentation de plusieurs générateurs de vapeur des boucles du circuit primaire du réacteur nucléaire.

Par exemple, comme représenté sur la figure 3, l'ensemble des trois injecteurs de vapeur 20, 20', 20" à deux étages peut être utilisé pour assurer l'alimentation de quatre générateurs de vapeur, dans le cas d'un réacteur nucléaire dont le circuit primaire comporte quatre boucles, par l'intermédiaire de quatre lignes d'alimentation 7a, 7b, 7c, 7d reliées chacune à la tubulure d'un générateur de vapeur.

De même, la vapeur alimentant les premières entrées des injecteurs-condenseurs peut être prélevée dans un ou plusieurs générateurs de vapeur.

On peut régler le débit d'alimentation du générateur de vapeur dans une très large plage allant par exemple de 25 m³/h à 260 m³/h par mise en service d'un ou plusieurs injecteurs condenseurs alimentés en vapeur prélevée dans la partie supérieure d'un générateur de vapeur par la canalisation de vapeur 5.

Pour la mise en oeuvre du procédé suivant l'invention, suivant le type et la puissance du réacteur nucléaire à eau sous pression et suivant les fonctions de refroidissement et de réchauffage à assurer, on peut utiliser, pour chacun des générateurs de vapeur, un ou plusieurs injecteurs condenseurs. Dans le cas où il est nécessaire d'utiliser plusieurs injecteurs condenseurs, ces injecteurs condenseurs sont placés en parallèle de manière à pouvoir être mis en service indépendamment les uns des autres et ces injecteurs condenseurs présentent généralement des caractéristiques différentes, en particulier en ce qui concerne les débits d'eau d'alimentation fournis.

Comme il sera expliqué plus loin, ces injecteurs condenseurs et leurs moyens d'actionnement peuvent être substitués au système APD comportant une pompe telle que 17 d'alimentation du générateur de vapeur à partir du réservoir de stockage d'eau d'alimentation 10, comme représenté sur la figure 1A correspondant à l'art antérieur.

Sur la figure 1B correspondant à l'invention, on a représenté un injecteur condenseur 20, permettant de mettre en oeuvre le procédé suivant l'invention, et les circuits du réacteur, de manière à pouvoir décrire de manière comparative le dispositif suivant l'art antérieur et le dispositif suivant l'invention.

Dans le cas de l'utilisation d'injecteurs condenseurs tels que 20, 20' ou 20", pour assurer l'alimentation du générateur de vapeur, on ne prévoit pas de pompe d'alimentation APD qui est remplacée par les injecteurs-condenseurs.

De manière classique, comme représenté sur la figure 1B, le générateur de vapeur 1 comporte un circuit de purge 31 qui est mis en oeuvre dans certaines phases d'utilisation du ou des injecteurs condenseurs pour la mise en oeuvre du procédé suivant l'invention, comme il sera expliqué plus loin.

Les circuits de vapeur du générateur représenté sur la figure 1 comportent, de manière classique, en plus du contoumement 13 de la vapeur vers le condenseur, un contoumement 13' de la vapeur vers l'atmosphère.

Le taux de compression imposé pour le ou les injecteurs condenseurs, c'est-à-dire le rapport de la pression de l'eau à la sortie de l'injecteur condenseur à la pression de la vapeur alimentant la première entrée de l'injecteur condenseur peut être faible, ce taux de compression étant sensiblement égal à 1, en tenant compte des pertes de charge dans la ligne d'injection. En effet, l'eau d'alimentation doit être injectée dans la partie secondaire 3 du générateur de vapeur à une pression sensiblement égale à la pression de vapeur dans la partie supérieure du générateur de vapeur, la vapeur et l'eau d'alimentation étant sensiblement en équilibre de pression.

Comme indiqué plus haut, un injecteur-condenseur a un fonctionnement de type volumétrique, de sorte que la pression d'injection, à la sortie, n'a pas d'influence sur le débit de l'injecteur-condenseur.

Sur la figure 4, on a représenté sous la forme d'un diagramme température en fonction du temps, l'évolution de la température (et donc de la pression) dans le circuit primaire comportant la partie primaire d'au moins un générateur de vapeur d'un réacteur nucléaire à eau sous pression, au moment d'un arrêt à chaud, pendant un refroidissement entre un arrêt à chaud et les conditions de mise en service du RRA ainsi que lors d'un réchauffage du circuit primaire entre les conditions de fonctionnement du RRA et les conditions d'arrêt à chaud.

La courbe 32 représentative des variations de la température dans le circuit primaire du réacteur nucléaire comporte un palier 32a correspondant à l'arrêt à chaud à une température voisine de 296°C. La pression dans le circuit primaire est alors voisine de 83 bars. A la suite d'un arrêt à chaud, représenté par la partie 32a de la courbe, on peut effectuer un refroidissement du réacteur entre les conditions d'arrêt à chaud et les conditions de mise en service du circuit de refroidissement RRA du réacteur à l'arrêt, comme représenté par la partie 32b de la courbe 32 avec un gradient thermique typiquement de 28°C/h.

A l'issue du refroidissement jusqu'aux conditions de mise en service du RRA, la température dans le circuit primaire est voisine de 180°C.

On peut maintenir les conditions permettant de démarrer le refroidissement du réacteur à l'arrêt, comme représenté par la partie de courbe 32c ou mettre en service le circuit RRA, la température du circuit primaire du réacteur évoluant alors dans la zone 33.

A partir des conditions de mise en service du circuit RRA, on peut réchauffer le circuit primaire jusqu'aux conditions d'arrêt à chaud, comme représenté par la partie 32d de la courbe 32.

On va maintenant décrire l'utilisation du procédé et du dispositif suivant l'invention pour effectuer un refroidissement tel que représenté par la courbe 32b et un réchauffage du circuit primaire tel que représenté par la courbe 32d ainsi qu'éventuellement des maintiens dans les conditions d'arrêt à chaud ou de démarrage de l'arrêt à froid, comme représenté par les parties de courbe 32a et 32c.

Pendant le fonctionnement normal du réacteur nucléaire à eau sous pression, le système APD suivant l'invention se substituant au système APD avec pompe suivant l'art antérieur et comportant un ou plusieurs injecteurs condenseurs 20, par exemple trois injecteurs condenseurs 20, 20' et 20" tels que décrits plus haut, est maintenu à l'arrêt. Les injecteurs-condenseurs ne sont pas alimentés en vapeur et en eau et sont isolés des circuits du réacteur nucléaire par fermeture de vannes d'arrêt.

Après un arrêt du réacteur nucléaire par retombée des barres de commande, pour effectuer un maintien en arrêt à chaud représenté par la partie de courbe 32a ou un refroidissement tel que représenté par la partie de courbe 32b sur la figure 4, on réalise la mise en service du système suivant l'invention comportant les injecteurs condenseurs.

Pour cela, on ouvre les vannes telles que 30a permettant d'alimenter le ou les injecteurs condenseurs en eau d'alimentation, situées sur les embranchements des injecteurs condenseurs dont on réalise la mise en service.

On ouvre également les vannes telles que 29a, 21, 21', 21" permettant d'alimenter les premières entrées des injecteurs condenseurs telles que 20, 20' et 20" en vapeur, à partir de la ligne 5 reliée à la partie supérieure du générateur de vapeur.

En fonction des besoins, on met en service un ou plusieurs injecteurs condenseurs, comme il sera expliqué plus loin et on règle les débits de vapeur et d'eau, de manière à alimenter le générateur de vapeur en eau d'alimentation sous pression à un débit voulu.

Les moyens de réglage fins du débit d'eau fournie par les injecteurs condenseurs comportent les vannes de réglage disposées sur les conduites reliées aux injecteurs condenseurs et les commandes électriques 27 de réglage de la position de la tuyère d'injection d'eau permettant de régler la section du col de la tuyère d'injection de vapeur dans l'injecteur condenseur. On peut ainsi moduler les débits de vapeur d'eau d'alimentation.

En plus, les moyens de réglage comportent la vanne 22a disposée sur la ligne de retour d'eau d'alimentation dans le réservoir 10, dans le prolongement de la ligne 22 reliée aux sorties des injecteurs condenseurs. La vanne 22a permet de renvoyer une partie du débit fourni par les injecteurs condenseurs dans le réservoir 10 et donc de moduler le débit fourni à la ligne d'alimentation 7 du générateur de vapeur, par l'intermédiaire de la conduite de liaison 23.

Lors de la mise en service des injecteurs condenseurs, on ouvre également une vanne située sur une conduite de purge reliée à l'orifice de purge au niveau du col de la conduite d'eau de l'injecteur condenseur, pour l'amorçage de l'injecteur-condenseur.

A la suite d'un arrêt programmé du réacteur nucléaire, pour effectuer un maintien en arrêt à chaud ou un refroidissement jusqu'aux conditions de mise en service du circuit RRA, il est nécessaire de fournir au générateur de vapeur, un débit d'eau élevé, du fait que la consommation d'eau est alors maximale. Le système de purge du générateur de vapeur peut être en service pendant ces périodes.

On utilise alors la capacité maximale d'alimentation du système suivant l'invention. Dans le cas d'un système d'alimentation comportant les trois injecteurs condenseurs décrits plus haut, ces trois injecteurs condenseurs sont mis en service, de manière à fournir au générateur de vapeur un débit d'eau de l'ordre de 260 m³/h sous une pression inférieure ou égale à 83 bars.

Du fait du fonctionnement volumétrique de l'injecteur-condenseur, il n'y a pas à envisager de réglage en fonction de la pression du circuit secondaire.

Les injecteurs condenseurs alimentés en vapeur à 296°C et en eau du réservoir d'alimentation à 130°C fournissent alors de l'eau d'alimentation au générateur de vapeur à une température qui peut être de 160°C à 180°C. On limite ainsi la fatigue thermique du piquage d'alimentation de la partie secondaire du générateur de vapeur 1 et la sollicitation des composants internes et de la virole du générateur de vapeur.

La chaleur du circuit primaire est évacuée par la vaporisation du débit important d'eau du circuit secondaire du ou des générateurs de vapeur, de sorte que la température du circuit primaire diminue, comme représenté par la partie de courbe 32b sur la figure 4.

Pendant le refroidissement, on module le débit des injecteurs condenseurs, de manière à maintenir le niveau dans le générateur de vapeur. Le débit de vapeur est réglé suivant le gradient de température que l'on cherche à atteindre.

En particulier, au cours du refroidissement, on ne maintient pas en service l'ensemble des injecteurs condenseurs, le débit nécessaire d'eau d'alimentation du générateur de vapeur ne justifiant plus, après un certain temps, la mise en service de l'ensemble des injecteurs condenseurs. Par exemple, à la fin du refroidissement, avant la mise en service du système de refroidissement du réacteur à l'arrêt, le débit nécessaire d'eau d'alimentation n'est plus que de 90 m³/h, de sorte qu'on ne maintient plus en service qu'un seul injecteur condenseur dont le débit maximal est de 120 m³/h.

Pendant les phases de refroidissement du circuit primaire, après mise en arrêt à chaud, le contoumement de la vapeur 13 ou le circuit 13' est mis en service, la vapeur étant renvoyée au condenseur qui assure l'alimentation du réservoir d'alimentation 10. Des appoints d'eau aux condenseurs sont effectués par un circuit d'alimentation du condenseur représenté en 34 sur la figure 1.

L'eau du condenseur est renvoyée au réservoir 10 d'alimentation du générateur de vapeur par la pompe 15 appelée pompe CEX.

Pour effectuer le démarrage du réacteur nucléaire, par exemple à partir des conditions de mise en service du refroidissement pour arrêt à froid et pour porter la température du circuit primaire jusqu'aux conditions relatives à l'arrêt à chaud, comme représenté par la partie de courbe 32d sur la figure 4, on met en service un seul injecteur condenseur à faible débit dont la seule fonction est de maintenir le niveau dans la partie secondaire du générateur de vapeur, en cas de consommation d'eau, et par exemple, dans le cas décrit plus haut, l'injecteur condenseur dont le débit maximal est de 30 m³/h. En effet, le circuit primaire peut présenter une faible chaleur résiduelle et l'échauffement du circuit primaire est réalisé par la chaleur dégagée par l'eau primaire mise en circulation à grande vitesse dans le circuit primaire, par les pompes primaires.

L'eau contenue dans le réservoir 10 est préalablement dégazée par un dégazeur alimenté en vapeur. Des appoints d'eau réalisés dans le réservoir 10 s'effectuent depuis le condenseur 12, en utilisant la pompe 15. Le maintien en température du réservoir 10 peut être assuré en particulier par des injections de vapeur provenant de la conduite 5 reliée à la partie supérieure du générateur de vapeur ou par de la vapeur générée par une chaudière électrique auxiliaire (SVA).

La température du circuit primaire augmente du fait que la chaleur dégagée par l'eau primaire n'est pas entièrement évacuée par l'eau secondaire à faible débit.

Le réservoir 10 est maintenu en pression par la vapeur, comme indiqué plus haut.

Le système suivant l'invention utilisant des injecteurs condenseurs est installé dans la salle des machines du réacteur nucléaire. Ce système, du fait de sa réalisation et de ses fonctions n'est pas soumis à des conditions particulières de sûreté et de redondance.

Du fait que la pression de l'eau d'alimentation doit être le plus élevé possible, on installe le réservoir de stockage 10 dans la partie supérieure, et les injecteurs condenseurs dans la partie inférieure de la salle des machines du réacteur nucléaire. La dénivelée est par exemple de 20 m entre le réservoir de stockage et les injecteurs-condenseurs.

Les avantages du procédé et du dispositif suivant l'invention résultant du remplacement de la pompe APD selon l'art antérieur par des injecteurs condenseurs sont les suivants :
- meilleure fiabilité des injecteurs condenseurs par rapport aux pompes, du fait que ces injecteurs condenseurs ne comportent pas de partie mobile et en particulier de partie tournante nécessitant l'utilisation de paliers et de garnitures d'étanchéité,
- coût d'installation et d'entretien réduit des injecteurs condenseurs par rapport à une pompe d'un système APD classique,
- installation facilitée du système APD suivant l'invention, du fait d'un faible encombrement des injecteurs condenseurs (typiquement pour un appareil : longueur 2 m et diamètre 250 mm),
- réduction du risque de fatigue thermique des piquages d'alimentation du générateur de vapeur du fait que la température d'eau injectée est plus élevée que dans le cas d'une utilisation du système APD comportant une pompe (par exemple 160°C ou lieu de 110°C),
- fonctionnement des injecteurs-condenseurs comme des générateurs volumétriques, ce qui évite des vannes de réglage susceptibles de caviter et de s'encrasser,
- fonctionnement possible du système APD suivant l'invention, en cas de perte totale des alimentations électriques du réacteur nucléaire, moyennant certains aménagements permettant d'utiliser les ressources en eau d'un réacteur nucléaire (ou tranche) jumelé au réacteur nucléaire sur lequel on utilise le système APD suivant l'invention.

L'invention ne se limite pas au mode de réalisation qui a été décrit.

C'est ainsi qu'on peut utiliser un ou plusieurs injecteurs condenseurs présentant des débits différents de ceux qui ont été indiqués plus haut, en fonction de la puissance du réacteur nucléaire et des besoins de refroidissement ou de réchauffage du circuit primaire.

Les injecteurs-condenseurs peuvent être à un ou plusieurs étages et comporter une ou plusieurs entrées de vapeur. Généralement, les injecteurs-condenseurs utilisés dans le cadre du procédé suivant l'invention comportent au moins deux étages comportant chacun au moins une entrée de vapeur.

Les circuits primaires des réacteurs nucléaires à eau sous pression comportent au moins deux et généralement trois ou quatre générateurs de vapeur qui peuvent être alimentés simultanément par un système suivant l'invention comportant des injecteurs condenseurs.

De manière générale, l'invention s'applique à tout réacteur nucléaire à eau sous pression, pour l'alimentation du ou des générateurs de vapeur du réacteur, pendant des phases transitoires entre un arrêt à chaud et un refroidissement pour arrêt à froid.

## Revendications

1. Procédé d'alimentation d'au moins un générateur de vapeur d'un réacteur nucléaire à eau sous pression, en eau d'alimentation secondaire, le réacteur nucléaire comportant un circuit primaire (2) dans lequel circule de l'eau primaire de refroidissement du coeur du réacteur nucléaire assurant l'échauffement, dans le générateur de vapeur (1), de l'eau d'alimentation par contact thermique, dans lequel on assure l'alimentation du générateur de vapeur (1) en utilisant au moins un injecteur-condenseur (20) dont on alimente au moins une première entrée (24a, 24b) en vapeur d'eau et une seconde entrée (25a) avec de l'eau d'alimentation, l'eau à la sortie (26) de l'injecteur-condenseur (20, 20', 20°) étant fournie sous pression et à température élevée au générateur de vapeur, **caractérisé en ce que**, pendant une phase au cours de laquelle on fait varier la température et la pression de l'eau de refroidissement entre des conditions d'arrêt à chaud du réacteur nucléaire et des conditions permettant de mettre en service un circuit de refroidissement du réacteur à l'arrêt, on fournit l'eau d'alimentation sous pression et à température élevée au générateur de vapeur à un débit modulé, par réglage de l'alimentation en vapeur et en eau d'alimentation de l'au moins un injecteur condenseur (20, 20', 20").

2. Procédé suivant la revendication 1, **caractérisé par le fait qu'**on alimente l'au moins une première entrée (24a, 24b) de l'injecteur-condenseur (20, 20', 20") avec de la vapeur d'eau prélevée dans la partie supérieure du générateur de vapeur (1)

3. Procédé suivant la revendication 1 ou 2, **caractérisé par le fait qu'**on module le débit d'alimentation de l'au moins un générateur de vapeur (1), par mise en service d'un ou plusieurs injecteurs condenseurs (20, 20', 20") disposés en parallèle.

4. Procédé suivant la revendication 3, **caractérisé par le fait qu'**on met en service l'un au moins de trois injecteurs-condenseurs (20, 20', 20") disposés en parallèle présentant des caractéristiques de fourniture de débit d'eau différentes.

5. Procédé suivant l'une quelconque des revendications 3 et 4, **caractérisé par le fait que**, dans le cas d'un refroidissement du circuit primaire entre des conditions d'arrêt à chaud et des conditions de démarrage d'un circuit de refroidissement du réacteur à l'arrêt, on met en fonctionnement l'ensemble des injecteurs condenseurs (20, 20', 20") dans une phase initiale de refroidissement, de manière à fournir un débit maximal d'eau d'alimentation au générateur de vapeur (1).

6. Procédé suivant l'une quelconque des revendications 1 à 5, **caractérisé par le fait que** l'eau d'alimentation du générateur de vapeur est prélevée par au moins un injecteur condenseur (20, 20', 20") dans un réservoir de stockage (10) alimenté en eau d'alimentation à partir d'un condenseur (12) de la vapeur produite par le générateur de vapeur (1).

7. Dispositif d'alimentation d'au moins un générateur de vapeur (1) d'un réacteur nucléaire à eau sous pression, en eau d'alimentation secondaire, le réacteur nucléaire comportant un circuit primaire (2) dans lequel circule de l'eau primaire de refroidissement du coeur du réacteur nucléaire assurant l'échauffement, dans le générateur de vapeur (1), de l'eau d'alimentation par contact thermique, comportant un réservoir (10) de stockage d'eau d'alimentation du générateur de vapeur et des moyens (20, 20', 20") d'injection d'eau d'alimentation du réservoir de stockage (10) dans une partie secondaire (3) du générateur de vapeur (1), les moyens d'injection d'eau d'alimentation dans la partie secondaire (3) du générateur de vapeur (1) comportant au moins un injecteur condenseur (20, 20', 20") dont une première entrée (20a) est reliée à au moins une canalisation (5) de vapeur connectée à une partie supérieure de la partie secondaire (3) du générateur de vapeur (1), dont une seconde entrée (20b) est reliée au réservoir de stockage d'eau d'alimentation (10) et dont une sortie (20c) est reliée à une ligne d'injection dans une tubulure (18) de la partie secondaire (3) du générateur de vapeur (1), **caractérisé en ce que** le dispositif d'alimentation est apte à alimenter le générateur de vapeur (1) en eau d'alimentation secondaire, pendant une phase au cours de laquelle on fait varier la température et la pression de l'eau de refroidissement entre des conditions d'arrêt à chaud du réacteur nucléaire et des conditions permettant la mise en service d'un circuit de refroidissement du réacteur à l'arrêt. et **en ce qu'**il comporte trois injecteurs condenseurs (20, 20', 20") disposés en parallèle dont les premières entrées et les secondes entrées, respectivement, sont reliées en parallèle à une conduite d'alimentation de vapeur (29) et une conduite d'alimentation d'eau (30), avec interposition de vannes d'arrêt (21, 21', 21", 30a. 30'a, 30"a), de manière à pouvoir assurer la mise en service indépendamment les uns des autres desdits injecteurs condenseurs.

8. Dispositif suivant la revendication 7, **caractérisé par le fait que** l'au moins un injecteur-condenseur (20, 20', 20") comporte au moins un premier et un second étages (20a, 20b) en série comprenant chacun au moins deux entrées de vapeur (24a, 24'a, 24b, 24'b), une entrée d'eau (25a, 25b) et une sortie d'eau (26), l'entrée d'eau (25b) du second étage communiquant avec la sortie d'eau du premier étage.

9. Dispositif suivant la revendication 8, **caractérisé p**ar le fait que l'au moins un injecteur-condenseur (20, 20', 20") comporte deux étages (20a, 20b) comportant chacun deux entrées de vapeur (24a, 24'a, 24b, 24'b).

10. Dispositif suivant l'une quelconque des revendications 7, à 9, **caractérisé par le fait que** l'au moins un injecteur-condenseur (20, 20', 20") est relié par sa première entrée (24a, 24'a, 24b, 24'b) à la partie supérieure d'au moins un générateur de vapeur (1) par au moins une conduite sur laquelle est disposée au moins une vanne d'arrêt (21, 21', 21", 29a) et, par sa seconde entrée, au réservoir de stockage d'eau secondaire (10), par au moins une conduite sur laquelle est disposée au moins une vanne d'arrêt (30a).

11. Dispositif suivant la revendication 10, **caractérisé par le fait que** la seconde entrée (25a, 25b) de l'injecteur condenseur (20) est reliée au réservoir (10) de stockage d'eau d'alimentation, par l'intermédiaire d'un circuit (16) de recirculation d'eau d'alimentation comportant une pompe de circulation (16a), la seconde entrée (25a, 25b) de l'au moins un injecteur-condenseur étant reliée au circuit (16) du côté du refoulement de la pompe de circulation (16a).

12. Dispositif suivant l'une quelconque des revendications 7 à 11, **caractérisé par le fait que** la sortie (26) de l'injecteur condenseur (20) est reliée à la tubulure (18) de la partie secondaire (3) du générateur de vapeur, par l'intermédiaire d'une conduite de liaison (23) sur laquelle est disposé un clapet anti-retour (23a).

13. Dispositif suivant la revendication 12, **caractérisé par le fait que** la sortie (20c) de l'injecteur-condenseur (20, 20', 20") est reliée par une canalisation (22), à la fois à la conduite de liaison (23) et au réservoir de stockage d'eau d'alimentation (10), par l'intermédiaire d'une conduite de retour d'eau d'alimentation au réservoir de stockage (10) sur laquelle est disposée une vanne d'arrêt (22a) et de réglage.

14. Dispositif suivant l'une quelconque des revendications 7 à 13, dans le cas d'un réacteur nucléaire ayant un circuit primaire comportant au moins deux boucles sur chacune desquelles est placé un générateur de vapeur (1), **caractérisé par le fait que** la sortie d'eau d'alimentation (26) de l'au moins un injecteur-condenseur (20, 20', 20") est reliée à la partie secondaire d'au moins deux générateurs de vapeur (1).

## Claims

1. A process for feeding at least one steam generator of a pressurised water nuclear reactor with secondary feedwater, the nuclear reactor comprising a primary circuit (2) in which the primary cooling water for the nuclear reactor core flows and heats the feedwater in the steam generator (1) by thermal contact, in which steam is fed to at least a first inlet (24a, 24b) of the steam generator (1) and feedwater is fed to a second inlet (25a) using at least one injector-condenser (20), the water at the outlet (26) from the injector-condenser (20, 20', 20") being fed to the steam generator under pressure and at high temperature, **characterised in that** during a stage in the course of which the temperature and pressure of the cooling water are varied between conditions of hot shutdown of the nuclear reactor and the conditions in which a shut down reactor cooling circuit can be placed in service the feedwater under pressure and at high temperature is fed to the steam generator in a flow which is controlled by adjusting the steam and feedwater feed to the at least one injector-condenser (20, 20', 20").

2. A process according to claim 1, **characterised in that** steam drawn from the top of the steam generator (1) is fed to the at least one inlet (24a, 24b) of the injector-condenser (20, 20', 20").

3. A process according to claim 1 or 2, **characterised in that** the feed flow to the at least one steam generator is controlled (1) by placing one or more injector-condensers (20, 20', 20") arranged in parallel in service.

4. A process according to claim 3, **characterised in that** at least one of the three injector-condensers (20, 20', 20") arranged in parallel are placed in service with different feedwater flow characteristics.

5. A process according to either of claims 3 and 4, **characterised in that** in the case where the primary circuit is cooled between the conditions of hot shutdown and the conditions in which a shut down reactor cooling circuit is started up, the set of injector-condensers (20, 20', 20") is set in operation during an initial cooling stage in such a way as to provide a maximum flow of feedwater to the steam generator (1).

6. A process according to any one of claims 1 to 5, **characterised in that** the feedwater to the steam generator is drawn off by at least one injector-condenser (20, 20', 20") from a storage tank (10) fed with feedwater from a condenser (12) of the steam produced by the steam generator (1) .

7. A device for feeding at least one steam generator (1) of a pressurised water nuclear reactor with secondary feedwater, the nuclear reactor comprising a primary circuit (2) through which the primary nuclear reactor core cooling water flows and heats the feedwater in the steam generator (1) by thermal contact, comprising a steam generator feedwater storage tank (10) and means (20, 20', 20") for injecting feedwater from the storage tank (10) into a secondary part (3) of the steam generator (1), the means for injecting feedwater into the secondary part (3) of the steam generator (1) comprising at least one injector-condenser (20, 20', 20"), a first inlet (20a) of which is connected to at least one steam pipe (5) connected to a top part of the secondary part (3) of the steam generator (1), a second inlet (20b) of which is connected to the feedwater storage tank (10) and an outlet (20c) of which is connected to an injection line into a pipe (18) of the secondary part (3) of the steam generator (1), **characterised in that** the feed device can feed the steam generator (1) with secondary feedwater during a stage in which the temperature and pressure of the cooling water is varied between the conditions of hot shutdown of the nuclear reactor and conditions which enable the shut down reactor cooling circuit to be placed in service, and **in that** it comprises three injector-condensers (20, 20', 20") arranged in parallel whose first inlets and second inlets are connected in parallel to a steam feed pipe (29) and a water feed pipe (30) respectively with interposed stop valves (21, 21', 21", 30a, 30'a, 30"a) in such a way that the said injector-condensers can be placed into service independently of each other.

8. A device according to claim 7, **characterised in that** the at least one injector-condenser (20, 20', 20") comprises at least a first and a second stage (20a, 20b) in series each comprising at least two steam inlets (24a, 24'a, 24b, 24'b), one water inlet (25a, 25b) and one water outlet (26), the water inlet (25b) of the second stage communicating with the water outlet of the first stage.

9. A device according to claim 8, **characterised in that** the at least one injector-condenser (20, 20', 20") comprises two stages (20a, 20b) each of which comprise two steam inlets (24a, 24'a, 24b, 24'b).

10. A device according to any one of claims 7 to 9, **characterised in that** the at least one injector-condenser (20, 20', 20") is connected by its first inlet (24a, 24'b, 24b, 24'b) to the top part of at least one steam generator (1) by means of at least one pipe in which there is located at least one stop valve (21, 21', 21", 29a) and by a second inlet to the secondary water storage tank (10) by at least one pipe in which there is located at least one stop valve (30a).

11. A device according to claim 10, **characterised in that** the second inlet (25a, 25b) of the injector-condenser (20) is connected to the feedwater storage tank (10) through a circuit (16) for the recirculation of feedwater comprising a circulating pump (16a), the second inlet (25a, 25b) of the at least one injector-condenser being connected to the circuit (16) on the delivery side of the circulating pump (16a).

12. A device according to any one of claims 7 to 11, **characterised in that** the outlet (26) from the injector-condenser (20) is connected to the pipe (18) of the secondary part (3) of the steam generator through a connecting pipe (23) in which a non-return valve (23a) is located.

13. A device according to claim 12, **characterised in that** the outlet (20c) of the injector-condenser (20, 20', 20") is connected by a pipe (22) to both the connecting pipe (23) and the feedwater storage tank (10) by a pipe returning feedwater to the storage tank (10) in which a stop and control valve (22a) is located.

14. A device according to any one of claims 7 to 13, in the case of a nuclear reactor having a primary circuit comprising at least two loops, in each of which a steam generator (1) is located, **characterised in that** the feedwater outlet (26) from the at least one injector-condenser (20, 20', 20") is connected to the secondary part of the at least two steam generators (1).

## Patentansprüche

1. Verfahren zur Speisung wenigstens eines Dampferzeugers eines Druckwasser-Kernreaktors mit Sekundärspeisewasser - wobei der Kernreaktor einen Primärkreis (2) umfasst, in dem das Primärwasser zur Kühlung des Reaktorkerns zirkuliert, das in dem Dampferzeuger (1) das Speisewasser durch thermischen Kontakt erhitzt -, bei dem man die Speisung des Dampferzeugers (1) gewährleistet, indem man wenigsten eine Strahlpumpe (20) benutzt, von der man wenigstens einen ersten Eingang (24a, 24b) mit Wasserdampf und einen zweiten Eingang (25a) mit Speisewasser speist, wobei das Wasser am Ausgang (26) der Strahlpumpe (20, 20', 20") unter Druck und mit hoher Temperatur an den Dampferzeuger geliefert wird,
**dadurch gekennzeichnet, dass** - während einer Phase, in der man die Temperatur und den Druck des Kühlwassers variiert zwischen Bedingungen der Heißabschaltung des Reaktors und Bedingungen, die ermöglichen, einen Kühlkreis des abgeschalteten Reaktors in Betrieb zu nehmen -, man dem Dampferzeuger Speisewasser unter Druck und von hoher Temperatur mit einem Durchsatz liefert, der moduliert wird durch Regulierung der Speisung wenigstens einer Strahlpumpe (20, 20', 20") mit Dampf und mit Speisewasser.

2. Verfahren nach Anspruch 1, **dadurch gekennzeichnet, dass** man wenigstens einen ersten Eingang (24a, 24b) der Strahlpumpe (20, 20', 20") mit Wasserdampf speist, entnommen im oberen Teil des Dampferzeugers (1).

3. Verfahren nach Anspruch 1 oder 2, **dadurch gekennzeichnet, dass** man den Speisungsdurchsatz wenigstens eines Dampfgenerators (1) moduliert, indem man mehrere parallelgeschaltete Strahlpumpen (20, 20', 20") benutzt.

4. Verfahren nach Anspruch 3, **dadurch gekennzeichnet, dass** wenigstens eine der drei parallelgeschalteten Strahlpumpen unterschiedliche Wasserdurchsatz-Kenndaten aufweist.

5. Verfahren nach einem der Ansprüche 3 und 4, **dadurch gekennzeichnet, dass** man im Falle einer Abkühlung des Primärkreises zwischen Heißabschaltungsbedingungen und Anfahrbedingungen eines Kühlkreises des abgeschalteten Reaktors in einer anfänglichen Abkühlungsphase alle Strahlpumpen (20, 20', 20") in Betrieb nimmt, um dem Dampferzeuger (1) eine maximale Speisewassermenge zu liefern.

6. Verfahren nach einem der Ansprüche 1 bis 5, **dadurch gekennzeichnet, dass** das Speisewasser des Dampferzeugers durch wenigstens eine Strahlpumpe (20, 20', 20") einem Speichertank (10) entnommen wird, der aus einem Kondensator (12) des durch den Dampfgenerator (1) erzeugten Dampfes mit Speisewasser gespeist wird.

7. Vorrichtung zur Speisung wenigstens eines Dampferzeugers (1) eines Druckwasserreaktors mit Sekundärwasser - wobei der Reaktor einen Primärkreis (2) umfasst, in dem das Primärwasser zur Kühlung des Reaktorkerns zirkuliert, das in dem Dampferzeuger (1) das Speisewasser durch thermischen Kontakt erhitzt -, die einen Speisewasser-Speichertank (10) und Einrichtungen (20, 20', 20") zum Einspritzen des Speisewasser des Speichertanks (10) in einen Sekundärteil (3) des Dampferzeugers (1) umfasst, wobei die Einrichtungen zum Einspritzen des Speisewassers in den Sekundärteil (3) des Dampferzeugers (1) wenigstens eine Strahlpumpe (20, 20', 20") umfassen, deren erster Eingang (20a) mit wenigstens einer Dampfleitung (5) verbunden ist, die an einen oberen Teil des Sekundärteils (3) des Dampferzeugers (1) angeschlossen ist, deren zweiter Eingang (20b) mit dem Speisewasser-Speichertank (10) verbunden ist, und deren Ausgang (20c) mit einer Einspritzleitung in einen Stutzen (18) des Sekundärteils (3) des Dampferzeugers (1) verbunden ist,
**dadurch gekennzeichnet, dass** die Speisevorrichtung fähig ist, den Dampferzeuger (1) während einer Phase mit Sekundärspeisewasser zu speisen, während der man die Temperatur und den Druck des Kühlwassers variiert zwischen Bedingungen der Heißabschaltung des Reaktors und Bedingungen, die ermöglichen, einen Kühlkreis des abgeschalteten Reaktors in Betrieb zu nehmen,
und **dadurch**, dass sie drei parallelgeschaltete Strahlpumpen (20, 20', 20") umfasst, deren erste und zweite Eingänge jeweils parallel mit einer Dampfspeiseleitung (29) und einer Wasserspeiseleitung (30) verbunden sind, mit Zwischenschaltung von Sperrventilen (21, 21', 21", 30a, 30'a, 30"a), um die Strahlpumpen unabhängig voneinander in Betrieb nehmen zu können.

8. Vorrichtung nach Anspruch 7, **dadurch gekennzeichnet, dass** wenigstens eine Strahlpumpe (20, 20', 20") wenigstens eine erste und eine zweite Stufe (20a, 20b) in Serie umfasst, von denen jede wenigstens zwei Dampfeingänge (24a, 24'a, 24b, 24'b), einen Wassereingang (25a, 25b) und einen Wasserausgang (26) umfasst, wobei der Wassereingang (25b) der zweiten Stufe mit dem Wasserausgang der ersten Stufe kommuniziert.

9. Vorrichtung nach Anspruch 8, **dadurch gekennzeichnet, dass** wenigstens eine Strahlpumpe (20, 20', 20") zwei Stufen (20a, 20b) umfasst, von denen jede zwei Dampfeingänge (24a, 24'a, 24b, 24'b) umfasst.

10. Vorrichtung nach einem der Ansprüche 7 bis 9, **dadurch gekennzeichnet, dass** wenigstens eine der Strahlpumpen (20, 20', 20") mit ihrem ersten Eingang (24a, 24'a, 24b, 24'b) mit dem oberen Teil wenigstens eines Dampferzeugers (1) durch wenigstens eine Leitung verbunden ist, in der wenigstens ein Sperrventil (21, 21', 21", 29a) angeordnet ist, und mit ihrem zweiten Eingang durch wenigstens eine Leitung, in der wenigstens ein Sperrventil (30a) angeordnet ist, mit dem Sekundärwasser-Speichertank (10) verbunden ist.

11. Vorrichtung nach Anspruch 10, **dadurch gekennzeichnet, dass** der zweite Eingang (25a, 25b) der Strahlpumpe (20) mit dem Speisewasser-Speichertank (10) durch einen Speisewasser-Rezirkulationskreis (16) verbunden ist, der eine Zirkulationspumpe (16a) umfasst, wobei der zweite Eingang (25a, 25b) wenigstens einer Strahlpumpe auf der Verdrängungsseite der Zirkulationspumpe (16a) mit dem Kreis (16) verbunden ist.

12. Vorrichtung nach einem der Ansprüche 7 bis 11, **dadurch gekennzeichnet, dass** der Ausgang (26) der Strahlpumpe (20) mit dem Stutzen (18) des Sekundärteils (3) des Dampferzeugers durch eine Verbindungsleitung (23) verbunden ist, in der ein Rückschlagventil (23a) angeordnet ist.

13. Vorrichtung nach Anspruch 12, **dadurch gekennzeichnet, dass** der Ausgang (20c) der Strahlpumpe (20, 20', 20") durch eine Leitung (22) zugleich mit der Verbindungsleitung (23) und mit dem Speisewasser-Speichertank (10) verbunden ist; mit dem Speichertank (10) mittels einer Speisewasser-Rückleitung, in der ein Sperr- und Regulierungsventil (22a) angeordnet ist.

14. Vorrichtung nach einem der Ansprüche 7 bis 13 im Falle eines Kernreaktors mit einem Primärkreis, der wenigstens zwei Schleifen umfasst, von der jede einen Dampferzeuger (1) enthält, **dadurch gekennzeichnet, dass** der Speisewasserausgang (26) wenigstens einer Strahlpumpe (20, 20', 20") mit dem Sekundärteil von wenigstens zwei Dampferzeugern (1) verbunden ist.
